Europäisches Patentamt

**European Patent Office**

Office européen des brevets

(11) Veröffentlichungsnummer: **0 259 732**
**B1**

(12) **EUROPÄISCHE PATENTSCHRIFT**

(45) Veröffentlichungstag der Patentschrift:
07.02.90

(21) Anmeldenummer: 87112613.2

(22) Anmeldetag: 29.08.87

(51) Int. Cl.⁴: **F16J 15/12**

(54) **Dichtung für Ventile.**

(30) Priorität: 12.09.86 DE 3631030
05.03.87 DE 8703325 U

(43) Veröffentlichungstag der Anmeldung:
16.03.88 Patentblatt 88/11

(45) Bekanntmachung des Hinweises auf die Patenterteilung:
07.02.90 Patentblatt 90/6

(84) Benannte Vertragsstaaten:
AT BE CH DE ES FR GB GR IT LI LU NL SE

(56) Entgegenhaltungen:
EP-A- 0 075 323
DE-A- 2 944 520
DE-A- 3 145 863
DE-A- 3 206 481
DE-C- 3 207 895
FR-A- 2 495 266

(73) Patentinhaber: Flühs Drehtechnik GmbH., Lösenbacher Landstrasse 2, D-5880 Lüdenscheid 6(DE)

(72) Erfinder: Ziebach, Helmut, Lindenhof 11,
D-5880 Lüdenscheid 6(DE)
Erfinder: Lange, Peter, Teutonenstrasse 80 b,
D-5880 Lüdenscheid(DE)

(74) Vertreter: Dörner, Lothar, Dipl.-Ing.,
Stresemannstrasse 15, D-5800 Hagen 1(DE)

ACTORUM AG

## Beschreibung

### Technisches Gebiet

Die Erfindung betrifft eine Dichtung für Ventile, insbesondere für Ventiloberteile, bestehend aus einem Profilring aus gummielastischem Werkstoff, in dem ein Tragring angeordnet ist.

### Stand der Technik

Eine Dichtung der vorgenannten Art ist aus der DE-A1 3 206 481 bekannt. Bei der bekannten Dichtung, hat der Tragring rechteckigen Querschnitt; der Profilring ist als Lippendichtung ausgebildet. In dem Profilring ist eine ringförmige Aussparung rechteckigen Querschnitts vorgesehen, die den Tragring aufnimmt. Die Außenflächen vor Tragring und Profilring liegen auf demselben Zylindermantel. Auch aus der FR-A 2 495 266 ist eine mehrteilig ausgeführte Dichtung bekannt. Sie umfaßt einen Tragring aus verhältnismäßig starrem Material, in dessen Unterseite eine erste Gummidichtung in der Form eines flachen Rings eingelegt und auf dessen Oberseite eine schmale Gummidichtung eingesetzt ist. Schließlich ist aus der DE-A 3 145 863 eine Doppellippendichtung bekannt, gegen deren Innenfläche ein Federring drückt. Mit den bekannten Dichtungen ist folgendes Problem nicht zu lösen:

Aus den genannten Druckschriften, außerdem aus der DE-C2 3 207 895 und der DE-A1 2 944 520 sind Ventiloberteile für Sanitärarmaturen mit einem hülsenartigen Kopfstück bekannt. Die Ventiloberteile weisen jeweils im Anschluß an die dem Wasserzulauf zugewandte innere Stirnfläche eine von der Hülse gehaltene feste Ventilsitzscheibe aus Keramikmaterial – Einlaßscheibe – auf, an der innen eine bewegliche Ventilsitzscheibe ebenfalls aus Keramikmaterial gleitet – Steuerscheibe – und an der außen ein Dichtring anliegt. Der Dichtring liegt unter Vorspannung lose an der Einlaßscheibe und an dem Gehäuse des Ventiloberteils an; er überragt die Stirnfläche. Der Dichtring dient der Abdichtung einerseits zum Gehäuse und zur Einlaßscheibe, andererseits zu einem Ventilsitz, der in einem Ventilunterteil vorgesehen ist, mit dem das Ventiloberteil zusammenwirkt. Das bekannte Ventiloberteil ist nach der Wasserzulaufseite demontierbar. Bedingt durch den Klebeeffekt zwischen dem Dichtring und dem Ventilsitz kann es zu einer unfreiwilligen Demontage des Ventiloberteils kommen. Unbefugte können den Dichtring demontieren.

### Darstellung der Erfindung

Hier will die Erfindung Abhilfe schaffen. Der Erfindung liegt die Aufgabe zugrunde, eine Dichtung zu schaffen, mit deren Hilfe die Ventilsitzscheiben in einem Ventil, insbesondere in einem Ventiloberteil, so gehalten werden, daß eine unfreiwillige Demontage verhindert wird. Gemäß der Erfindung wird diese Aufgabe dadurch gelöst, daß der Tragring als ungeschlitzter Sprengring ausgebildet ist, der einen Querschnitt nach Art eines liegenden L aufweist, dessen Rücken an der inneren Stirnseite des Profilrings anliegt und dessen Außenteil – Fuß die Außenfläche des Profilrings umgreift.

Die Dichtung nach der Erfindung schnappt mittels des Sprengrings in dem Ventil, insbesondere in der Hülse eines Ventiloberteils, ein. Nach ihrem Einschnappen hat die Dichtung eine definierte Lage. Der Sprengring hält die Einlaßscheibe und damit auch alle weiteren Elemente im Innern des Ventiloberteils. Eine Demontage von der Wasserzulaufseite durch Unsachkundige ist nicht möglich. Da von der entgegengesetzten Seite – wie bei den bekannten Ventiloberteilen – eine Demontage ausgeschlossen ist, ist das Ventiloberteil nach seiner Montage insgesamt nicht demontierbar. Vom Dichtring aufgenommene Belastungen werden nicht auf die Einlaßscheibe, sondern auf den Tragring und von diesem auf das Gehäuse übertragen. Die Einlaßscheibe wird entlastet. Zwischen ihr und der Steuerscheibe herrscht, unabhängig von unterschiedlichen Anpreßdrücken, die durch die verschiedenen Formen und Tiefen der Ventilsitze der Ventilunterteile bedingt sind, gleichmäßiger Druck. Dies ist vorallem wichtig, wenn das Ventiloberteil im Warmwasserbereich eingesetzt wird: Nach Wegspülen einer Fettschicht zwischen den Scheiben im Verlaufe lang dauernder Benutzung kann es nicht zur Schwergängigkeit der Teile kommen. Ausgestaltungen der Erfindung sind in den Unteransprüchen angegeben.

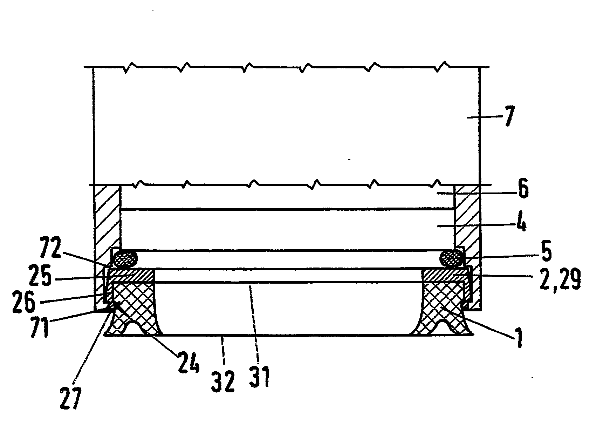

### Kurze Beschreibung der Zeichnung

Ein Ausführungsbeispiel der Erfindung ist in der Zeichnung dargestellt und wird nachfolgend im einzelnen beschrieben. Die einzige Figur zeigt teilweise im Axialschnitt, teilweise in der Ansicht in etwa 5-facher Vergrößerung eine Hülse für ein Ventiloberteil mit einer Dichtung.

### Bester Weg zur Ausführung der Erfindung

In dem Ausführungsbeispiel ist die Verwendung der Dichtung in einer Hülse 7 eines Ventiloberteils für Sanitärarmaturen gewählt. Der Begriff "Hülse" umfaßt dabei nicht nur ein selbständiges Konstruktionselement, sondern auch Ansätze, die als Hülse ausgebildet und mit anderer Konstruktionselementen materialeinheitlich hergestellt sind, z. B. ein hülsenartiges Kopfstück.

Auf ihrer dem Wasserzulauf zugewandten Stirnseite ist in der Hülse 7 ein als ungeschlitzter Sprengring 29 ausgebildeter Tragring 2 eingelassen. Auf der Wasserzulaufseite liegt an dem Sprengring 29 der Profilring 1 als Dichtring an, der über die Stirnseite der Hülse 7 vorsteht. Auf der dem Profilring 1 abgewandten Seite des Sprengrings 29 ist von der Hülse 7 eine Einlaßscheibe 4 aus keramischem Material gehalten. Die Einlaßscheibe 4 ist mit nicht dargestellten Durchtrittsöffnungen versehen. Der Aussendurchmesser der Einlaßscheibe 4 ist größer als der Innendurchmesser des Sprengrings 29. Auf der dem Sprengring 29 abgewandten Seite liegt an der Einlaßscheibe 4 eine Steuerscheibe 6 aus keramischem Material an. Auch die Steuerscheibe 6 ist mit nicht dargestellten Durchtrittsöffnungen versehen. Durch Drehen der Steuerscheibe 6 bezogen auf die in der Hülse 7 gehaltene Einlaßscheibe 4 werden die Durchtrittsöffnungen geöffnet oder geschlossen.

Zwischen dem Sprengring 29 und der Einlaßscheibe 4 ist ein weiterer Dichtring 5 angeordnet.

Die Hülse 7 weist auf der dem Wasserzulauf zugewandten Stirnseite einen eingezogenen Rand 71 auf. Im Abstand von dieser Stirnseite weist die Hülse 7 außerdem eine Schulter 72 auf. Die Auflagefläche der Schulter 72 ist dem Wasserzulauf zugewandt. Zwischen dem eingezogenen Rand 71 und der Schulter 72 ist der Sprengring 29 gehalten. Der Sprengring 29 wird von der Wasserzulaufseite eingebracht. Nach "Einschnappen" in den Bereich zwischen Rand 71 und Schulter 72 ist der Sprengring 29 ohne Gewalt nicht aus der Hülse herauszunehmen.

Der Sprengring 29 hat einen Querschnitt nach Art eines liegenden L. Sein Rücken 25 ist der Einlaßscheibe 4 zugewandt. Sein Fuß 26 ist in der Hülse 7, und zwar zwischen dem eingezogenen Rand 71 und der Schulter 72, gehalten. Der Sprengring 29 weist am freien Ende des Fußes 26 außen eine dem eingezogenen Rand 71 der Hülse 7 angepaßte ringförmige Ausnehmung 27 und innen den ringförmigen Vorsprung 24 auf. Zwischen Rücken 25 und Ausnehmung 27 verläuft der Fuß 26 an seiner Außenfläche konisch ansteigend.

Mit Hilfe des ringförmigen Vorsprungs 24 greift der Sprengring 29 in den Profilring 1 ein und hält letzteren in seiner Position. Wird der Profilring 1 axial belastet, wird die Last auf den Sprengring 29 übertragen, der an der Schulter 72 abgestützt ist und so die Last auf die Hülse 7 überträgt. Die Einlaßscheibe 4 wird entlastet; auf sie wirkt konstant der von dem Dichtring 5 zwischen Sprengring 29 und Einlaßscheibe 4 aufgebrachte Anpreßdruck. Auf der der Schulter 72 gegenüberliegenden Seite ist der Sprengring 29 mit seiner ringförmigen Ausnehmung 27 an dem eingezogenen Rand 71 der Hülse 7 abgestützt.

Gewerbliche Verwertbarkeit

Die Erfindung ist gewerblich verwertbar auf dem Gebiet der Ventile, insbesondere der Ventiloberteile für Sanitärarmaturen.

Patentansprüche

1. Dichtung für Ventile, bestehend aus einem Profilring (1) aus gummielastischem Werkstoff, in dem ein Tragring (2) angeordnet ist, dadurch gekennzeichnet, daß der Tragring (2) als ungeschlitzter Sprengring (29) ausgebildet ist, der einen Querschnitt nach Art eines liegenden L aufweist, dessen Rücken (25) an der inneren Stirnseite (1) des Profilrings anliegt und dessen Außenteil – Fuß – (26) die Außenfläche des Profilrings umgreift.

2. Dichtung nach Anspruch 1, dadurch gekennzeichnet, daß der Sprengring (29) am freien Ende des Fußes (26) außen eine ringförmige Ausnehmung (27) und innen einen ringförmigen Vorsprung (24) aufweist.

3. Dichtung nach Anspruch 2, dadurch gekennzeichnet, daß der Fuß (26) zwischen Rücken (25) und Ausnehmung (27) an seiner Außenfläche konisch ansteigend ausgebildet ist.

4. Dichtung nach einem der Ansprüche 1 bis 3 für eine Hülse (7), eines Ventiloberteils für Sanitärarmaturen mit einer von der Hülse (7) auf ihrer dem Wasserzulauf zugewandten Stirnseite gehaltenen Einlaßscheibe (4) aus keramischem Material, mit dem über diese Stirnseite vorstehenden Profilring (1) und mit einer auf der dem Wasserzulauf abgewandten Seite an der Einlaßscheibe (4) anliegenden Steuerscheibe (6) aus keramischem Material, dadurch gekennzeichnet, daß in der Hülse (7) zwischen Profilring (1) und Einlaßscheibe (4) der ungeschlitzte Sprengring (29) eingelassen ist, dessen Innendurchmesser kleiner als der Außendurchmesser der Einlaßscheibe (4) ist.

5. Dichtung nach Anspruch 4 dadurch gekennzeichnet, daß zwischen Sprengring (29) und Einlaßscheibe (4) ein weiterer Dichtring (5) angeordnet ist.

6. Dichtung nach Anspruch 4 oder 5, gekennzeichnet durch einen eingezogenen Rand (71) an der dem Wasserzulauf zugewandten Stirnseite der Hülse (7) und durch eine Schulter (72) im Abstand von dieser Stirnseite, zwischen denen der Sprengring (29) gehalten ist.

7. Dichtung nach einem der Ansprüche 4 bis 6, dadurch gekennzeichnet, daß der Rücken (25) des Sprengrings (29) der Einlaßscheibe (4) zugewandt und sein Fuß (26) in der Hülse (7) gehalten ist.

Claims

1. A valve seal comprising a section ring (1) made of elastomeric material and in which a bearing ring (2) is disposed, characterised in that the bearing ring (2) is a non-slotted snap ring (29) having a cross-section in the form of an L on one side, the back (25) thereof abutting the inner end face (31) of the section ring (1) and the outer part or foot thereof (26) surrounding the outer surface of the section ring.

2. A seal according to claim 1, characterised in that the snap ring (29) has an annular external recess (27) at the free end of the foot (26) and an inner annular projection (24).

3. A seal according to claim 2, characterised in that the outer surface of the foot (26) rises in conical manner between the back (25) and the recess (27).

4. A seal according to any of Claims 1 to 3 for a sleeve (7) of the top part of a valve for sanitary fittings, comprising a ceramic admission cam (4) held by the sleeve (7) on its end face facing the water inlet, the section ring (1) projecting beyond the end face, and a ceramic plate cam (6) abutting the admission cam (4) on the side remote from the water inlet, characterised in that the non-slotted snap ring (29) is inserted into the sleeve (7) between the section ring (1) and the admission cam (4) and its inner diameter is less than the outer diameter of the admission cam (4).

5. A seal according to claim 4, characterised in that a second sealing ring (5) is disposed between the snap ring (29) and the admission cam (4).

6. A seal according to claim 4 or 5, characterised by a recessed edge (71) on the end face of the sleeve (7) facing the water inlet, and a shoulder (27) at a distance from the end face, the snap ring (29) being held between the two.

7. A seal according to any of claims 4 to 6, characterised in that the back (25) of the snap ring (29) is held facing the admission cam (4) and its foot (26) is held in the sleeve (7).

**Revendications**

1. Garniture pour vannes, comprenant un anneau profilé (1) réalisé dans une matière caoutchouteuse dans lequel est disposé un anneau porteur (2), caractérisé en ce que l'anneau porteur (2) est réalisé sous la forme d'un jonc non fendu (29) qui présente une section transversale en L couché dont le dos (25) est appliqué contre la face frontale (31) de l'anneau profilé (1) et dont la partie extérieure – pied – (26) enveloppe la surface extérieure de l'anneau profilé.

2. Garniture selon la revendication 1, caractérisée en ce que le jonc (29) présente à l'extrémité libre du pied (26), à l'extérieur, un évidement annulaire (27) et à l'intérieur une saillie annulaire (24).

3. Garniture selon la revendication 2, caractérisée en ce que, entre le dos (25) et l'évidement (27), la face extérieure du pied (26) présente une forme conique en montant.

4. Garniture selon l'une des revendications 1 à 3, pour une douille (7) d'une partie supérieure de vanne pour robinetterie sanitaire, comprenant un disque d'admission (4) en céramique maintenu par la douille (7) sur son côté frontal dirigé vers l'arrivée d'eau, l'anneau profilé (1) dépassant dudit côté frontal et un disque de commande (6) en céramique appliqué contre le disque d'admission (4) du côté opposé à l'arrivée d'eau, caractérisée en ce que dans la douille (7) est inséré, entre l'anneau profilé (1) et le disque d'admission (4), le jonc non fendu (29) dont le diamètre intérieur est inférieur au diamètre extérieur du disque d'admission (4).

5. Garniture selon la revendication 4, caractérisée en ce qu'un joint d'étanchéité (5) supplémentaire est disposé entre le jonc (29) et le disque d'admission (4).

6. Garniture selon l'une des revendications 4 ou 5, caractérisée en ce qu'elle comprend un bord rentré (71) sur la face frontale de la douille (7) dirigée vers l'arrivée d'eau et un épaulement (72) disposé à distance de ladite face frontale, entre lesquels est maintenu le jonc (29).

7. Garniture selon l'une des revendications 4 à 6, caractérisée en ce que le dos (25) du jonc (29) est dirigé vers le disque d'admission (4) et que son pied (26) est maintenu dans la douille (7).